# EUROPÄISCHE PATENTSCHRIFT

(11) **EP 0 466 683 B1**
(45) Veröffentlichungstag und Bekanntmachung des Hinweises auf die Patenterteilung: **06.10.1993**
(21) Anmeldenummer: 91890145.5
(22) Anmeldetag: 05.07.1991
(51) Int. Cl.: A01B 63/10

(54) **Umsteuerbare Hydraulikanlage**
Reversible hydraulic plant
Appareil hydraulique réversible

(30) Priorität: 09.07.1990 AT 1455/90
(43) Veröffentlichungstag der Anmeldung: 15.01.1992
(73) Patentinhaber: REFORM-WERKE BAUER & CO. GESELLSCHAFT M.B.H., A-4600 Wels (AT)
(72) Erfinder: Gattermair, Gerhard, A-4710 Grieskirchen (AT); Grosse-Brockhoff, Franz Josef, Dipl.-Ing., A-4600 Wels (AT)
(74) Vertreter: Casati, Wilhelm, Dipl.-Ing.

(56) Entgegenhaltungen:
- AT-B- 388 483
- DE-A- 1 507 164
- DE-C- 2 742 424
- FR-A- 2 324 219
- FR-A- 2 570 246
- US-A- 4 787 293

## Beschreibung

Die Erfindung betrifft eine umsteuerbare Hydraulikanlage für das Hubwerk eines an einem Kraftfahrzeug angebauten Arbeitsgerätes mit einem zumindest eine Hebe- und Senkstellung sowie eine Neutralstellung aufweisenden Steuerventil, dessen Primärseite über eine erste Leitung mit einer Hydraulikpumpe sowie über eine zweite Leitung mit einem Ölbehälter verbunden ist, und dessen Sekundärseite mittels zweier Arbeitsleitungen, in welche zumindest ein Rückschlagventil, ein Druckbegrenzungsventil und ein Druckspeicher zwischengeschaltet ist, mit dem Hubwerk verbunden und auf einen einstellbaren Entlastungsdruck aufladbar ist.

Derartige Hydraulikanlagen sind insbesondere für die geregelte Steuerung der Höhenlage des Mähtisches bei Mähdreschern in der Weise bekannt, daß durch die Hydraulikanlage der Großteil des Mähtischgewichtes auf den Maschinenrahmen abgestützt wird und für die Höhenführung nur ein kleiner Rest des Gewichtes über Kufen oder ähnliches gleitend auf den Boden abgestützt werden muß.

So ist in der DE-PS 27 42 424 eine hydraulische Hubeinrichtung an einer Erntemaschine beschrieben, dessen zwei Arbeitsleitungen neben einem Rückschlagventil, einem Druckbegrenzungsventil und einem Druckspeicher weiters einen hydraulischen Sperrblock sowie ein Magnetventil samt elektrischer Leitungen und Schalter aufweisen. Das dafür verwendete Steuerventil beinhaltet eine Hebe-, eine Senk- und eine Neutralstellung. Die erste Arbeitsleitung führt vom Steuerventil über den Sperrblock sowie den Druckspeicher zur Hubeinrichtung. Die zweite Arbeitsleitung führt vom Steuerventil zum Druckbegrenzungsventil und weiter zum Ölbehälter und weist zwischen Druckbegrenzungsventil und Steuerventil eine Verbindungsleitung mit eingesetztem Rückschlagventil zur Hubeinrichtung auf. Weiters ist die zweite Arbeitsleitung mittels einer Leitung mit dem Sperrblock verbunden. Mittels dieser aufwendigen Hydraulikanordnung sowie der elektrischen Steuerung ist es möglich, ein an der Erntemaschine heb- und senkbar angebrachtes Arbeitsgerät von der Hebestellung rasch in die Arbeitsstellung abzusenken, wobei ein völliges Entlasten des Druckspeichers verhindert ist und somit ein einstellbarer Teil des Gewichtes des Arbeitsgerätes über die Hubeinrichtung abgestützt wird. Der Nachteil dieser bekannten Hydraulikanlage liegt im ungemein großen Bauaufwand.

Aus der DE-A-1507164 ist eine hydraulische Hubeinrichtung an Mähdreschern bekannt, bei welcher ebenfalls durch die Hydraulik ein Großteil des Mähtischgewichtes auf den Maschinenrahmen abgestützt wird, wodurch nur ein kleiner Rest des Gewichtes über Kufen am Boden abgestützt werden muß. Dazu ist bei dieser Ausführung das Druckbegrenzungsventil auf der Primärseite des Steuerventils, also in Rückflußrichtung der Flüssigkeit dem Steuerventil nachgeschaltet, angeordnet und läßt nur einen begrenzten Rückfluß während des in Arbeitsstellung befindlichen Mähtisches zu.

Zur Lösung des Problems der Entlastung von Arbeitsgeräten sowie zur Konstanthaltung des Entlastungsdruckes in Arbeitsstellung sind weiters Hydraulikausführungen bekannt geworden, die mit nur einer Arbeitsleitung arbeiten, wie dies beispielsweise in der AT-PS 37 74 09 und der CH-PS 593 002 geoffenbart ist.

Die Ausführung nach der AT-PS 37 74 09 weist ein Dreiwegesteuerventil auf, welches mittels einer Arbeitsleitung über ein Druckbegrenzungsventil, ein parallel dazu geschaltetes Rückschlagventil sowie einen Druckspeicher mit dem Hubzylinder verbunden ist. Zusätzlich ist in der Arbeitsleitung zwischen dem Steuerventil und dem Druckbegrenzungsventil ein weiteres entsperrbares Rückschlagventil eingesetzt, welches über eine Steuerleitung mit dem Steuerventil verbunden ist. Diese Hydraulikanordnung ist in erster Linie für die Nachrüstung an bereits vorhandenen Anlagen bestimmt. Das, im Betrieb auftretende Leckölverluste verhindernde, entsperrbare Rückschlagventil bedeutet einen zusätzlichen Bauaufwand und setzt bei automatischer Betätigung beim Senkvorgang über die Steuerleitung eine besondere Steuerventilausbildung voraus oder ergibt bei manueller Betätigung die Notwendigkeit der Doppelbetätigung von Steuerventil und Rückschlagventil.

Die in der CH-PS 593 002 dargestellte umsteuerbare Hydraulikanlage besteht aus einem Dreiwegesteuerventil, welches über eine Arbeitsleitung mit dem Hubwerk verbunden ist. An die Arbeitsleitung ist eine über ein Elektroventil, einen Druckspeicher sowie ein Druckbegrenzungsventil zum Ölbehälter führende weitere Leitung angeschlossen. Die Betätigung des Steuerventils erfolgt über eine Umsteuervorrichtung, welche einerseits eine Senk-, eine Neutral- sowie eine Hebestellung und andererseits über die Betätigung einer elektrischen Schaltung und damit des Elektroventiles eine Entlastungsstellung "Neutral" sowie "Laden" aufweist. Auch diese Ausführung weist zur Ausübung der angeführten Funktionen einen sehr hohen Bauaufwand auf.

Es ist daher Aufgabe der Erfindung eine Hydraulikanlage für das Hubwerk eines Kraftfahrzeuges zu schaffen, welche mit geringem Bauaufwand und einfacher Bedienung die schon bisher bestehenden Anforderungen an die einstellbare Entlastung von Arbeitsgeräten erfüllt und darüberhinaus die Möglichkeit des universellen Einsatzes von Arbeitsgeräten am gleichen Hubwerk bietet.

Die Aufgabe der Erfindung wird dadurch gelöst, daß das Steuerventil eine Ladestellung aufweist, in der die erste Leitung der Primärseite mit der ersten Arbeitsleitung und die zweite Leitung der Primärseite mit der zweiten Arbeitsleitung verbunden ist und daß die von der Pumpe beaufschlagte erste Arbeitsleitung mit dem Druckbegrenzungsventil, dem Druckspeicher und dem Hubwerk verbunden ist, wobei das Rückschlagventil in die von der Pumpe beaufschlagte erste Arbeitsleitung zum Steuerventil hin schließend, letzterem vorgelagert zwischengeschaltet ist, und daß das Druckbegrenzungsventil mit seiner Ablaßseite mit der zweiten Arbeitsleitung verbunden ist.

Der Vorteil dieser Anordnung besteht darin, daß durch die Verwendung handelsüblicher Steuerventile in Verbindung mit den genannten Hydraulikkomponenten ohne weitere hydraulische oder elektrische Steuerungen eine sehr einfache und kostengünstige Hydraulikanlage möglich wird, welche sich zudem durch die Ladestellung als besonders bedienungsfreundlich auszeichnet, in welcher es möglich ist, den Druckspeicher auf einen durch das. Druckbegrenzungsventil vorgegebenen Druck vorzuspannen, was durch die Anordnung beider Teile an der Sekundärseite des Steuerventils ermöglicht ist.

Zur Schaffung der Möglichkeit des universellen Einsatzes von Arbeitsgeräten am Hubwerk kann nach einem weiteren Merkmal der Erfindung in die erste Arbeitsleitung zwischen dem Druckspeicher sowie dem Hubwerk einerseits und dem Druckbe-grenzungsventil andererseits ein Umschalthahn eingebaut sein, an dem eine zum Steuerventil führende Kurz-schlußleitung angeschlossen ist.

Zur Erzielung einer besonders einfachen und damit kostengünstigen Ausbildung kann der Umschalthahn als 4/3 Wegeventil, (das ist ein Ventil mit vier Anschlüssen und drei Kückenstellungen) ausgebildet sein, dessen vierter Anschluß als Kurzschlußleitung eine das Rückschlagventil umgehende Leitung aufweist.

In einer weiteren Ausführungsform der Erfindung kann zwischen dem Umschalthahn und dem Druckbegrenzungsventil eine die erste und zweite Arbeitsleitung verbindende Leitung mit einem in Richtung zur ersten Arbeitsleitung öffnenden Rückschlagventil angeordnet sein, wodurch eine höhere Flexibilität in der hydraulischen Schaltung erzielt ist.

Bei einer anderen Ausführungsform kann der Umschalthahn als 3/3 Wegeventil (das ist ein Ventil mit drei Anschlüssen und drei Kückenstellungen) ausgebildet sein, dessen dritter Anschluß als Kurz-schlußleitung eine mit der zweiten Arbeitsleitung verbundene Leitung aufweist. Auch diese Ausuhrungsform zeichnet sich gegenüber dem Stand der Technik durch geringen Bauaufwand und universelle Einsatzmöglichkeit aus.

Bei einer besonders günstigen Ausbildung der Erfindung kann das Steuerventil als Vierwegesteuerventil ausgeführt sein.

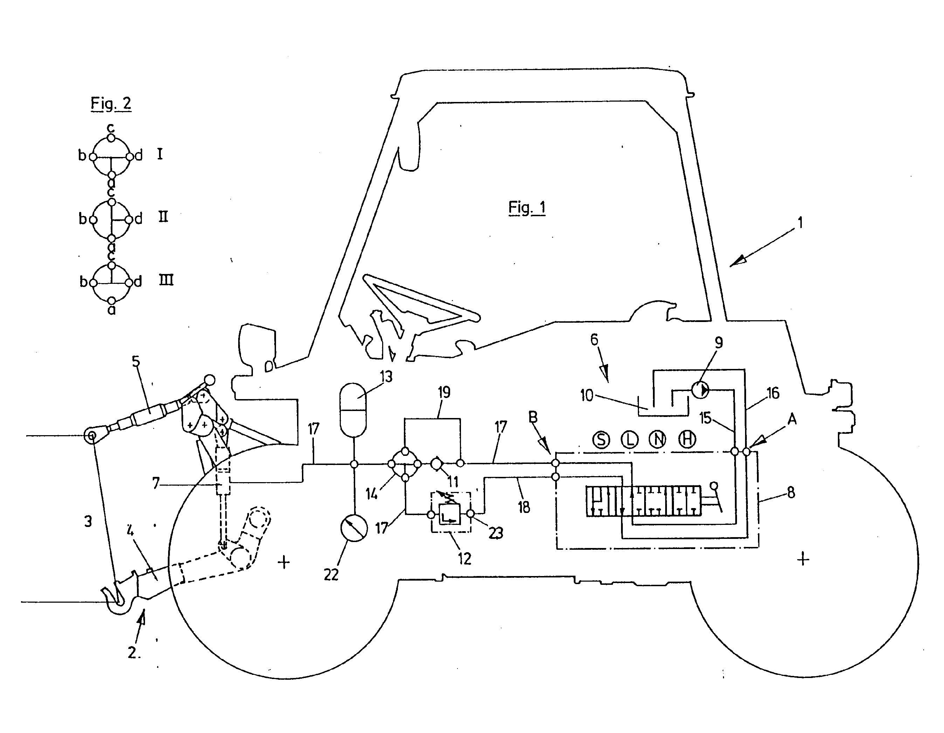

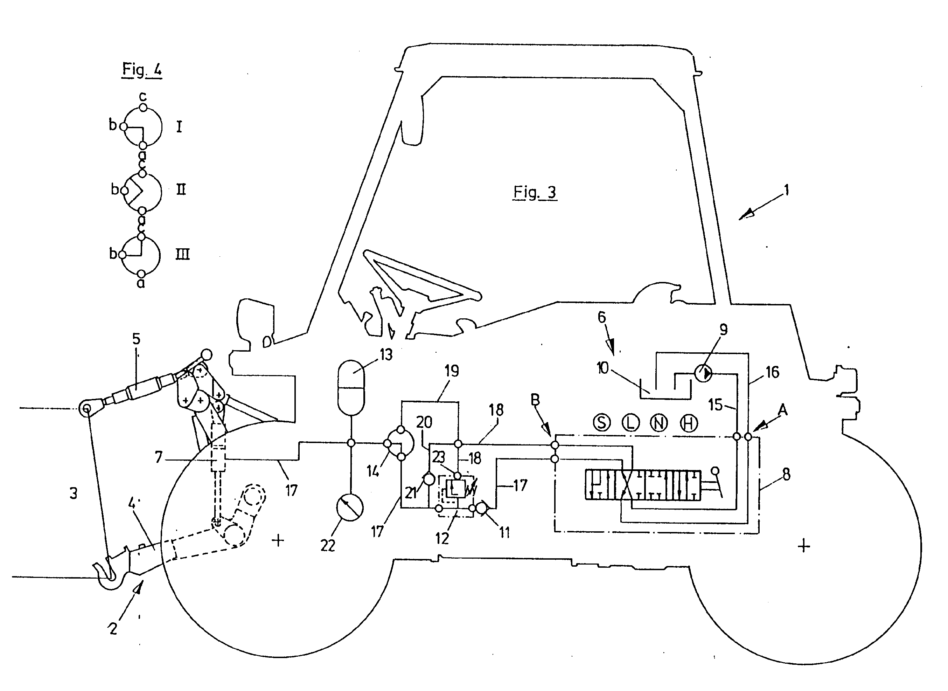

In der Zeichnung sind zwei Ausführungsbeispiele der Erfindung dargestellt und in der nachfolgenden Beschreibung näher erläutert. Es zeigt Fig.1 eine schematische Seitenansicht eines Kraftfahrzeuges mit einem Hubwerk und angebautem Arbeitsgerät sowie eingetragenem Schaltschema für die Hydraulikanlage und Fig.2 die nähere Bezeichnung der Schaltstellungen und Anschlüsse des in Fig.1 dargestellten Umschalthahnes. Analog zu den Fig.1 und 2 ist ein weiteres Ausführungsbeispiel der Erfindung in den Fig.3 und 4 dargestellt.

Das in den Fig.1 und 3 dargestellte Kraftfahrzeug 1 weist ein hydraulisches Hubwerk 2 zum Anbau eines Arbeitsgerätes 3 auf. Das Hubwerk 2 besteht aus zwei schwenkbaren Unterlenkern 4 und einem Oberlenker 5 über welche das Arbeitsgerät 3 mittels zumindest eines von der Hydraulikanlage 6 beaufschlagten Hydraulikzylinders 7 heb- und senkbar angebaut ist. Die Hydraulikanlage 6 umfaßt ein Steuerventil 8, eine Hydraulikpumpe 9, einen Ölbehälter 10, ein Rückschlagventil 11, ein Druckbegrenzungsventil 12, einen Druckspeicher 13, einen Umschalthahn 14 sowie die Leitungen 15 bis 19 und gegebenenfalls eine Verbindungsleitung 20 mit einem weiteren Rückschlagventil 21 sowie einem Manometer 22.

Das Steuerventil 8 ist auf der Primärseite mittels der Leitungen 15 und 16 mit der Hydraulikpumpe 9 und dem Ölbehälter 10 verbunden und weist folgende vier Stellungen auf: Senken S, Laden L, Neutral N und Heben H.

Bei der in Fig.1 dargestellten Ausführungsform ist auf der Sekundärseite B des Steuerventiles 8 die erste Arbeitsleitung 17 über das Rückschlagventil 11 mit dem Anschluß d des Umschalthahnes 14 verbunden. Das Rückschlagventil 11 ist so montiert, daß es in Richtung zum Umschalthahn 14 geöffnet ist. Weiters ist die erste Arbeitsleitung 17 mit dem Anschluß b und mit dem Anschluß a des Umschalthahnes 14 verbunden. Vom Anschluß b führt die erste Arbeitsleitung 17 über den Druckspeicher 13 und das Manometer 22 zum Hydraulikzylinder 7, vom Anschluß a zum Druckbegrenzungsventil 12, dessen Ablaßseite 23 über die zweite Arbeitsleitung 18 mit dem Steuerventil 8 verbunden ist. Die Kurzschlußleitung 19 ist mit dem Anschluß c des Umschalthahnes 14 und zwischen dem Steuerventil 8 und dem Rückschlagventil 11 mit der ersten Arbeitsleitung 17 verbunden. Der Umschalthahn 14 ist dabei als 4/3-Wegeventil ausgebildet und kann in die in Fig.2 dargestellten Stellungen I bis III geschaltet werden.

Die Ausführung nach Fig.3 weist auf der Sekundärseite B des Steuerventiles 8 eine erste Arbeitsleitung 17 auf, welche über das Rückschlagventil 11 mit dem Druckbegrenzungsventil 12 und dem Anschluß a' (Fig.4) des Umschalthahnes 14' verbunden ist. Die erste Arbeitsleitung 17 führt weiter vom Anschluß b' des Umschalthahnes 14' zum Druckspeicher 13, zum Manometer 22 sowie zum Hydraulikzylinder 7. Das Rückschlagventil 11 ist in Richtung Druckbegren-zungsventil 12 geöffnet. Die Ablaßseite 23 des Druckbegrenzungsventiles 12 ist mit der zweiten Arbeitsleitung 18 und diese wiederum mit dem Steuerventil 8 verbunden. Weiters ist zwischen dem Umschalthahn 14' und dem Druckbegrenzungsventil 12 eine die erste 17 und zweite Arbeitsleitung 18 verbindende Leitung 20 mit einem in Richtung zur ersten Arbeitsleitung 17 offenen Rückschlagventil 21 angeordnet. Vom Anschluß c' des Umschalthahnes 14' führt die Kurzschlußleitung 19 zur zweiten Arbeitsleitung 18.

Der Umschalthahn 14' ist dabei als 3/3-Wegeventil ausgebildet und weist die in Fig.4 dargestellten Stellungen I bis III auf.

Die Wirkungsweise der Hydraulikanlage ist wie folgt:

Bei Stellung I (Fig.2 und 4 des Umschalthahnes 14,14' ist die erste Arbeitsleitung 17 vom Steuerventil 8 in Richtung Druckbegrenzungsventil 12 und Hydraulikzylinder 7 geöffnet und die Kurzschlußleitung 19 im Umschalthahn 14,14' unterbrochen. Dies bedeutet, daß bei in Ladestellung L befindlichem Steuerventil 8 die Hydraulikpumpe 9 über die Leitung 15 Hydrauliköl über das Steuerventil 8, die erste Arbeitsleitung 17, das Rückschlagventil 11, den Umschalthahn 14, 14' zum Hydraulikzylinder 7 fördert und dabei den Druckspeicher 13 so lange auflädt, bis der am Druckbegrenzungs-ventil 12 eingestellte Druck erreicht ist und das weiter geförderte Hydrauliköl über die Ablaßseite 23, die zweite Arbeitsleitung 18 sowie die Leitung 16 zum Ölbehälter 10 fließt. Damit ist die Hydraulikanlage 6 für den Einsatz mit entlastetem Arbeitsgerät 3 bereit.

Diese Entlastungsstellung wird auch erreicht, wenn das angehobene Arbeitsgerät 3 aus der Stellung des Steuerventiles 8 Heben H über die Stellung Laden L auf den am Druckbegrenzungsventil 12 eingestellten Entlastungsdruck abgesenkt wird.

In der Stellung des Steuerventiles Heben H wird von der Hydraulikpumpe 9 über die Leitung 15 Hydrauliköl zum Hydraulikzylinder 7 gefördert. Bei der Ausführung nach Fig.1 geschieht dies direkt über die erste Arbeitsleitung 17, wobei der Rückfluß über die zweite Arbeitsleitung 18 im Steuerventil 8 gesperrt ist. Bei der Ausuhrung nach Fig. 3 erfolgt die Druckbeaufschlagung des Hydraulikzylinders 7 über die zweite Arbeitsleitung 18, die Verbindungsleitung 20 und die erste Arbeitsleitung 17, wobei der Rückfluß über die erste Arbeitsleitung 17 durch das Rückschlagventil 11 gesperrt ist. In beiden vorgenannten Fällen erfolgt der Ölkreislauf bei ausgefahrenem Hydraulikzylinder 7 über ein nicht dargestelltes Überdruckventil in der Steuerleitung des Steuerventiles 8.

Die Stellung des Steuerventiles 8 Senken S bedeutet, daß auch in dieser Stellung ein Absenken des Arbeitsgerätes 3 aus der Stellung Heben H auf einen am Druckbegrenzungsventil 12 eingestellten Druck möglich ist. In der Stellung S sind die beiden Arbeitsleitungen 17 und 18 im Steuerventil 8 kurzgeschlossen und über die Leitung 16 mit dem Ölbehälter 10 verbunden.

In der Stellung Neutral N sind die beiden Arbeitsleitungen 17 und 18 von den Leitungen 15 und 16 getrennt.

Die Stellung II (Fig.2 und 4) des Umschalthahnes 14,14' ergibt die Möglichkeit das Arbeitsgerät 3 in der angehobenen Stellung zu sperren, wobei die federnde Wirkung des Druckspeichers 13 erhalten bleibt. Dieser Vorteil der gefederten Sicherung des angehobenen Arbeitsgerätes 3 kommt insbesondere bei Fahrten auf holprigen Straßen zum Tragen.

In der Stellung III (Fig.2 und 4) des Umschalthahnes 14,14' wird die Wirkung des Druckbegrenzungsventiles 12 ausgeschaltet und dadurch die Hydraulikanlage 6 zur konventionellen Nutzung möglich.

Neben den schon beschriebenen Vorteilen besteht mit den dargestellten Ausführungsformen der Erfindung jederzeit die Möglichkeit Druckverluste infolge Leckage während des Einsatzes in der Stellung Senken S des Steuerventiles 8 nachzuladen. Für diesen Fall ist der Manometer 22 im Blickfeld des Fahrers angeordnet. Das Nachladen erfolgt während des Arbeitseinsatzes ungestört durch kurzzeitiges Halten des Steuerventiles 8 in der Stellung Laden L.

Selbstverständlich ist die Erfindung nicht auf die näher beschriebenen Ausführungsformen beschränkt. So können anstelle der dargestellten Steuerventile 8 solche mit geänderten oder erweiterten Funktionen verwendet werden. Ebenso ist es möglich im Rahmen der Erfindung Hydraulikanlagen 6 ohne Umschalthahn 14 mit fest verbundenen Arbeitsleitungen 17 zu betreiben.

## Patentansprüche

1. Umsteuerbare Hydraulikanlage für das Hubwerk (2) eines an einem Kraftfahrzeug (1) angebauten Arbeitsgerätes (3) mit einem zumindest eine Hebe-, eine Senk- und eine Neutralstellung aufweisenden Steuerventil (8), dessen Primärseite (A) über eine erste Leitung (15) mit einer Hydraulikpumpe (9) sowie über eine zweite Leitung (16) mit einem Ölbehälter (10) verbunden ist, und dessen Sekundärseite (B) mittels zweier Arbeitsleitungen (17, 18), in welche zumindest ein Rückschlagventil (11), ein Druckbegrenzungsventil (12) und ein Druckspeicher (13) zwischengeschaltet ist, mit dem Hubwerk (2) verbunden und auf einen einstellbaren Entlastungsdruck aufladbar ist, dadurch gekennzeichnet, daß das Steuerventil (8) eine Ladestellung (L) aufweist, in der die erste Leitung (15) der Primärseite (A) mit der ersten Arbeitsleitung (17) und die zweite Leitung (16) der Primärseite (A) mit der zweiten Arbeitsleitung (18) verbunden ist, und daß die von der Pumpe (9) beaufschlagte erste Arbeitsleitung (17) mit dem Druckbegrenzungsventil (12), dem Druckspeicher (13) und dem Hubwerk (2) verbunden ist, wobei das Rückschlagventil (11) in die von der Pumpe (7) beaufschlagte erste Arbeitsleitung (17) zum Steuerventil (8) hin schließend, letzterem vorgelagert zwischengeschaltet ist, und daß das Druckbegrenzungsventil (12) mit seiner Ablaßseite (23) mit der zweiten Arbeitsleitung (18) verbunden ist.

2. Umsteuerbare Hydraulikanlage nach Anspruch 1, dadurch gekennzeichnet, daß in die erste Arbeitsleitung (17) zwischen dem Druckspeicher (13) sowie dem Hubwerk (2) einerseits und dem Druckbegrenzungsventil (12) sowie dem Rückschlagventil (11) andererseits ein Umschalthahn (14, 14') eingebaut ist, an den eine zum Steuerventil (8) ehrende Kurzschlußleitung (19) angeschlossen ist.

3. Umsteuerbare Hydraulikanlage nach Anspruch 2, dadurch gekennzeichnet, daß der Umschalthahn (14) als 4/3-Wegeventil ausgebildet ist, dessen vierter Anschluß (c) als Kurzschlußleitung (19) eine das Rückschlagventil (11) umgehende Leitung aufweist (Fig. 1,2 ).

4. Umsteuerbare Hydraulikanlage nach Anspruch 2, dadurch gekennzeichnet, daß zwischen dem Umschalthahn (14') und dem Druckbegrenzungsventil (12) eine die erste (17) und zweite Arbeitsleitung (18) verbindende Leitung (20) mit einem in Richtung zur ersten Arbeitsleitung (17) öffnenden Rückschlagventil (21) angeordnet ist (Fig. 3,4 ).

5. Umsteuerbare Hydraulikanlage nach Anspruch 4, dadurch gekennzeichnet, daß der Umschalthahn (14') als 3/3-Wegeventil ausgebildet ist, dessen dritter Anschluß (c) als Kurzschlußleitung (19) eine mit der zweiten Arbeitsleitung (18) verbundene Leitung aufweist.

6. Umsteuerbare Hydraulikanlage nach Anspruch 1, dadurch gekennzeichnet, daß das Steuerventil (8) als Vierwegesteuerventil ausgeführt ist.

## Claims

1. A reversible hydraulic installation for the lifting gear (2) of an operating unit (3) installed on a motor vehicle (1), with a control valve (8) having at least one lifting-, one lowering- and one neutral position, the primary side (A) of which control valve is connected via a first line (15) to a hydraulic pump (9) and via a second line (16) to an oil reservoir (10), and the secondary side (B) of which is connected to the lifting gear (2) by means of two operating lines (17, 18) in which at least one non-return valve (11), one pressure relief valve (12) and one accumulator (13) are inserted, and which can be charged to an adjustable discharge pressure, characterised in that the control valve (8) has a charging position (L) in which the first line (15) of the primary side (A) is connected to the first operating line (17) and the second line (16) of the primary side (A) is connected to the second operating line (18), and that the first operating line (17) acted upon by the pump (9) is connected to the pressure relief valve (12), the accumulator (13) and the lifting gear (2), wherein the non-return valve (11) is inserted in the first operating line (17) acted upon by the pump (7) so that it closes in the direction of the control valve (8) upstream of the latter, and that the discharge side (23) of the pressure relief valve (12) is connected to the second operating line (18).

2. A reversible hydraulic installation according to claim 1, characterised in that a changeover cock (14, 14') is installed in the first operating line (17) between the accumulator (13) and the lifting gear (2) on one side and the pressure relief valve (12) and the non-return valve (11) on the other side, to which changeover cock a short circuit line (19) is connected which leads to the control valve (8).

3. A reversible hydraulic installation according to claim 2, characterised in that the changeover cock (14) is constructed as a 4/3-way valve, the fourth connection (c) of which has a line which by-passes the non-return valve (11) as a short-circuit line (19) (Figures 1 and 2).

4. A reversible hydraulic installation according to claim 2, characterised in that a line (20) connecting the first (17) and second (18) operating lines, with a non-return valve (21) opening in the direction towards the first operating line (17), is disposed between the changeover cock (14') and the pressure relief valve (12) (Figures 3 and 4).

5. A reversible hydraulic installation according to claim 4, characterised in that the changeover cock (14') is constructed as a 3/3-way valve, the third connection (c) of which has a line connected to the second operating line (18) as a short-circuit line (19).

6. A reversible hydraulic installation according to claim 1, characterised in that the control valve (8) is constructed as a four-way control valve.

## Revendications

1. Installation hydraulique à commande réversible pour le mécanisme de levage (2) d'un dispositif de travail (3) monté sur un véhicule automobile (1), comportant au moins une soupape de commande (8) possédant au moins une position de levage, une position d'abaissement et une position neutre et dont le côté primaire (A) est raccordé par l'intermédiaire d'une première canalisation (15) à une pompe hydraulique (9) ainsi que, par l'intermédiaire d'une seconde conduite (16), à un réservoir d'huile (10), et dont le côté secondaire (B) est raccordé au mécanisme de levage (2) au moyen de deux canalisations de travail (17,18), dans lesquelles sont intercalées au moins une soupape antiretour (11), une soupape de limitation de pression (12) et un accumulateur de pression (13), et peut être chargé à une pression de détente réglable, caractérisé en ce que la soupape de commande (8) possède une position de chargement (L), dans laquelle la première canalisation (15) du côté primaire (A) est raccordée à la première canalisation de travail (17) et la seconde canalisation (16) du côté primaire (A) est raccordée à la seconde canalisation de travail (18), et que la première canalisation de travail (17), chargée par la pompe (9), est raccordée à la soupape de limitation de pression (12), à l'accumulateur de pression (13) et au mécanisme de levage (2), la soupape antiretour (11) étant intercalée en amont de la soupape de commande (8), en réalisant une fermeture en direction de cette soupape, dans la première canalisation de travail (17) chargée par la pompe (7) et aboutissant à la soupape de commande (8), et que la soupape de limitation de pression (12) est raccordée, par son côté sortie (23), à la seconde canalisation de travail (18).

2. Installation hydraulique à commande réversible selon la revendication 1, caractérisée en ce que dans la première canalisation de travail (17) est monté, d'une part entre l'accumulateur de pression (13) et le mécanisme de levage (2) et d'autre part entre la soupape de limitation de pression (12) ainsi que la soupape antiretour (11), à un robinet de commutation (14,14'), auquel est raccordée une canalisation de court-circuit (19) aboutissant à la soupape de commande (8).

3. Installation hydraulique à commande réversible selon la revendication 2, caractérisée en ce que le robinet de commutation (14) est réalisé sous la forme d'une soupape à 4/3 voies, dont le quatrième raccord (c) comporte, en tant que canalisation de court-circuit (19), une canalisation contournant la soupape antiretour (11) (figures 1, 2).

4. Installation hydraulique à commande réversible selon la revendication 2, caractérisée en ce qu'entre le robinet de commutation (14') et la soupape de limitation de pression (12) est disposée une canalisation (20), qui relie la première canalisation de travail (17) et la seconde canalisation de travail (18) à une soupape antiretour (21) qui s'ouvre en direction de la première canalisation de travail (17). (Figures 3, 4).

5. Installation hydraulique à commande réversible selon la revendication 4, caractérisée en ce que le robinet de commutation (14') est réalisé sous la forme d'une soupape à 3/3 voies, dont le troisième raccord (c) comporte, en tant que canalisation de court-circuit (19), une canalisation raccordée à la seconde canalisation de travail (18).

6. Installation hydraulique à commande réversible selon la revendication 1, caractérisée en ce que la soupape de commande (8) est réalisée sous la forme d'une soupape de commande à quatre voies.
